(19) Europäisches Patentamt
European Patent Office
Office européen des brevets

(11) **EP 3 815 519 A1**

(12) **EUROPEAN PATENT APPLICATION**

(43) Date of publication:
**05.05.2021 Bulletin 2021/18**

(51) Int Cl.:
**A01G 20/00** (2018.01)   **A01G 7/00** (2006.01)
**A01D 34/00** (2006.01)

(21) Application number: **20204400.4**

(22) Date of filing: **28.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019   IT 201900020196**

(71) Applicant: **Stiga S.p.A. in breve anche St. S.p.A.**
**31033 Castelfranco Veneto (TV) (IT)**

(72) Inventors:
• **VALLONE, Varna**
  **31033 Castelfranco Veneto (TV) (IT)**
• **PIETROBON, Christian**
  **36022 San Giuseppe di Cassola (VI) (IT)**
• **ROBINSON, Sean**
  **31033 Castelfranco Veneto (TV) (IT)**

(74) Representative: **PGA S.p.A.**
  **Via Mascheroni, 31**
  **20145 Milano (IT)**

(54) **METHOD FOR OBTAINING AT LEAST ONE PREDICTIVE PIECE OF INFORMATION RELATING TO A TURFGRASS**

(57)   The present invention relates to a method for obtaining at least one predictive piece of information relating to a turfgrass. In a first step of the method, the geographic location of the turfgrass is established. In a second step of the method, a time span of interest is defined. In a third step of the method, one or more meteorological parameters related to the geographic location are acquired, for each day of said time span. In a fourth step of the method, the at least one predictive piece of information is calculated on the basis of the one or more meteorological parameters related to the geographic location of the turfgrass. The at least one predictive piece of information comprises the estimated growth of said turfgrass on each day of the time span of interest. According to a preferred embodiment of the present invention, the one or more meteorological parameters comprise an expected average temperature.

FIG. 3A

# EP 3 815 519 A1

**Description**

The present invention relates to a method for obtaining at least one predictive piece of information relating to a turfgrass.

It is well known that a correct management of turfgrass, for example the turfgrass of home gardens, needs maintenance operations such as cutting, irrigation and fertilizer application. These operations, however, being generally performed by people without specific gardening skills, happen to be not very effective, or even counterproductive. For example, poor irrigation or mistakes in fertilizer application can make the turfgrass turn yellow.

Nowadays, scheduling and running maintenance operations automatically, for example by setting the activation frequency of a self-driving robotic lawnmower or an irrigation system, is not always convenient. For example, a cutting with mulching when the turfgrass is too wet can create (with an excessive accumulation of lawn felt) the conditions for fungal proliferation. As another example, excessive irrigation can develop rot or cause the growth of moss and weeds.

The present invention aims to solve the aforementioned drawbacks.

In particular, the present invention aims to preserve a turfgrass in an adequate state of health (thus resulting neat, tidy and harmonious), even when its maintenance is not carried out by specialized personnel. Furthermore, the present invention aims to optimize the necessary resources (time, electricity, fuel, water, fertilizer) to allow a turfgrass to remain in an adequate state of health.

Furthermore, the present invention aims to provide its users with a method for managing turfgrass in the most automatic and intelligent way possible, employing current network technologies. Furthermore, the present invention aims to allow those who will have to take care of the maintenance of turfgrass to make use of suitable user interfaces, both accurate and easy to consult.

The objectives set forth herein are effectively achieved by means of the present invention, in particular as defined by means of the following aspects.

According to a 1st aspect, the present invention relates to a method for obtaining at least one predictive piece of information relating to a turfgrass, comprising the steps of:

a) establishing the geographic location of said turfgrass,

b) defining a time span of interest,

c) acquiring, for each day of said time span, one or more meteorological parameters related to said geographic location and

d) calculating said at least one predictive piece of information on the basis of said one or more meteorological parameters, said at least predictive piece of information comprising the estimated growth of said turfgrass on each day of said time span.

According to a 2nd aspect, dependent on the 1st aspect, the present invention relates to a method for obtaining at least one predictive piece of information relating to a turfgrass, wherein said one or more meteorological parameters comprising an expected average temperature.

According to a 3rd aspect, dependent on the 1st aspect or on the 2nd aspect, the present invention relates to a method for obtaining at least one predictive piece of information relating to a turfgrass, wherein said step a) comprises one of the sub-phases of:

- manually entering at least one geographical coordinate or at least one geographical reference of said turfgrass by means of a dedicated user interface,

- identifying the location of said turfgrass on a virtual map,

- detecting the geographical position of said turfgrass by means of a sensor device.

According to a 4th aspect, dependent on the 3rd aspect, the present invention relates to a method for obtaining at least one predictive piece of information relating to a turfgrass, wherein the geographical position of said turfgrass is detected by means of a global GNSS (Global Navigation Satellite System) satellite position detector, preferably according to the GPS (Global Positioning System) technology.

According to a 5th aspect, dependent on anyone of the previous aspects, the present invention relates to a method for obtaining at least one predictive piece of information relating to a turfgrass, said step b) comprises the sub-step of creating a first array [0, ..., i, ..., n], the elements of said first array being the days of said time span, said first

2

array extending therefore between a current date and an end date separated from said current date by a predetermined number of days.

According to a 6th aspect, dependent on the 5th aspect, the present invention relates to a method for obtaining at least one predictive piece of information relating to a turfgrass, wherein said first array is suitable to be dynamically allocated in memory cells and to be updated daily.

According to a 7th aspect, dependent on the 5th aspect or on the 6th aspect, the present invention relates to a method for obtaining at least one predictive piece of information relating to a turfgrass, wherein said predetermined number of days is comprised between three days and ten days, in particular between five days and eight days.

According to an 8th aspect, dependent on anyone of the previous aspects, the present invention relates to a method for obtaining at least one predictive piece of information relating to a turfgrass, wherein said step c) comprises the sub-step of creating a second array $[Temp\_m (0), ..., Temp\_m (i), ..., Temp\_m (n)]$, the elements of said second array being the average temperatures expected in the days of said time span at said geographical position.

According to a 9th aspect, dependent on the 8th aspect, the present invention relates to a method for obtaining at least one predictive piece of information relating to a turfgrass, wherein said second array is suitable to be dynamically allocated in memory cells and to be updated daily.

According to a 10th aspect, dependent on anyone of the previous aspects, the present invention relates to a method for obtaining at least one predictive piece of information relating to a turfgrass, wherein said step c) comprises the sub-step of receiving a data package from a meteorological service, said one or more meteorological parameters being extractable and/or obtainable from said data package.

According to an 11th aspect, dependent on the 10th aspect, the present invention relates to a method for obtaining at least one predictive piece of information relating to a turfgrass, wherein said data package is received from said meteorological service by means of a remote communication network.

According to a 12th aspect, dependent on anyone of the previous aspects, the present invention relates to a method for obtaining at least one predictive piece of information relating to a turfgrass, wherein said step d) comprises the sub-step of creating a third array $[GP (0), ..., GP (i), ..., GP (n)]$, the elements of said third array being the expected daily variation or the expected cumulative variation of the height of said turfgrass on each day of said time span.

According to a 13th aspect, dependent on anyone of the previous aspects, the present invention relates to a method for obtaining at least one predictive piece of information relating to a turfgrass, wherein the step of acquiring at least one descriptive piece of information related to said turfgrass is further comprised, said at least one descriptive piece of information comprising at least one of the following:

- the current height of said turfgrass detected by means of a dedicated sensor device or entered manually by means of a dedicated user interface,

- the signalling of an operation performed on said turfgrass and possibly of the type of such operation, said operation being particularly a cutting of said turfgrass or an irrigation of said turfgrass or a fertilization of said turfgrass.

According to a 14th aspect, dependent on anyone of the previous aspects, the present invention relates to a method for obtaining at least one predictive piece of information relating to a turfgrass, wherein said step d) comprises the sub-step of creating a fourth array $[h\_max (0), ..., h\_max (i), ..., h\_max (n)]$, the elements of said fourth array being the expected height of said turfgrass on each day of said time span.

According to a 15th aspect, dependent on anyone of the previous aspects, the present invention relates to a method for obtaining at least one predictive piece of information relating to a turfgrass, wherein the type of grass of said turfgrass is taken into account for the calculation of said at least one predictive piece of information,

According to a 16th aspect, dependent on the 15th aspect, the present invention relates to a method for obtaining at least one predictive piece of information relating to a turfgrass, wherein it is taken into account if the grass of said turfgrass of C3 (micro-therm) type or of C4 (macro-therm) type for the calculation of said at least one predictive piece of information.

According to a 17th aspect, dependent on the 16th aspect, the present invention relates to a method for obtaining at least one predictive piece of information relating to a turfgrass, wherein said step d) comprises the sub-steps of:

- performing a first calculation of said at least one predictive piece of information assuming that the grass of said turfgrass is of C3 type,

- performing a second calculation of said at least one predictive piece of information assuming that the grass of said turfgrass is of C4 type,

- doing a comparison between said first calculation and said second calculation and

- obtaining said at least one predictive piece of information from said first calculation or from said second calculation on the basis of said comparison.

According to a 18th aspect, dependent on anyone of the previous aspects, the present invention relates to a method for obtaining at least one predictive piece of information relating to a turfgrass, wherein one or more correction factors are taken into account for the calculation of said at least one predictive piece of information.

According to a 19th aspect, dependent on the 18th aspect, the present invention relates to a method for obtaining at least one predictive piece of information relating to a turfgrass, wherein said correction factors comprise a first corrective factor, a second correction factor and a third correction factor, respectively related to the hydration of said turfgrass, to the solar irradiation of said turfgrass and to the fertilization of said turfgrass,

According to a 20th aspect, dependent on the 18th aspect or on the 19th aspect, the present invention relates to a method for obtaining at least one predictive piece of information relating to a turfgrass, wherein said one or more correction factors are calculated and/or updated on a daily basis.

According to a 21st aspect, dependent on anyone of the aspects from the 18th aspect to the 20th aspect, the present invention relates to a method for obtaining at least one predictive piece of information relating to a turfgrass, wherein, in the event of concurrence of a plurality of correction factors, only the correction factor of greater significance and/or of higher value is taken into account for calculating said at least one predictive piece of information.

According to a 22nd aspect, dependent on anyone of the previous aspects, the present invention relates to a method for obtaining at least one predictive piece of information relating to a turfgrass, wherein the step of scheduling, on the basis of said at least one predictive piece of information, an activation and/or an activation mode of at least one device designed to operate on said turfgrass, such as a device for cutting said turfgrass or a device for irrigating said turfgrass or a device for applying fertilizer to said turfgrass, is further comprised.

According to a 23rd aspect, dependent on the 22nd aspect, the present invention relates to a method for obtaining at least one predictive piece of information relating to a turfgrass, wherein in scheduling the activation and/or the activation mode of said at least one device, criteria are adopted for optimizing one or more resources including electricity, fuel, water and fertilizer.

According to a 24th aspect, dependent on anyone of the previous aspects, the present invention relates to a method for obtaining at least one predictive piece of information relating to a turfgrass, wherein said at least one device is a self-driving lawnmower and said method is suitable for determining on which day or in which days of said time span said self-driving lawnmower should be activated on said turfgrass.

According to a 25th aspect, dependent on the 24th aspect, the present invention relates to a method for obtaining at least one predictive piece of information relating to a turfgrass, wherein said self-driving lawnmower is configured to allow adjustments of the cutting height of said turfgrass and said method is further adapted to determine the cutting height selected for each activation of said self-driving lawnmower.

According to a 26th aspect, dependent on anyone of the previous aspects, the present invention relates to a method for obtaining at least one predictive piece of information relating to a turfgrass, wherein the step of generating, on the basis of said at least one predictive piece of information, at least one daily suggestion about the opportunity or the inopportunity of performing one or more maintenance operations of said turfgrass, particularly a cutting of said turfgrass and/or an irrigation of said turfgrass and/or a fertilization of said turfgrass is further comprised.

According to a 27th aspect, dependent on the 26th aspect, the present invention relates to a method for obtaining at least one predictive piece of information relating to a turfgrass, wherein the step of generating, on the basis of said at least one predictive piece of information, at least one daily suggestion about the preferred time or the preferred times to perform said one or more maintenance operations is further comprised.

According to a 28th aspect, dependent on the 26th aspect or on the 27th aspect, the present invention relates to a method for obtaining at least one predictive piece of information relating to a turfgrass, wherein one or more of the following factors contribute to the generation of said at least one daily suggestion:

- proven availability or proven unavailability of a user, in particular as a result of an online calendar consultation,

- probability of precipitation being lower or higher than a fixed threshold value or variable threshold value depending on said geographic position,

- expected humidity being lower or higher than a predetermined threshold and

- ascertained state of the grass of said turfgrass, in particular ascertained state of dormancy.

According to a 29th aspect, dependent on anyone of the aspects from the 26th aspect to the 28th aspect, the present invention relates to a method for obtaining at least one predictive piece of information relating to a turfgrass, wherein said at least one daily suggestion relates to possible cutting operations of said turfgrass by means of a hand-guided lawnmower and comprises an indication about the possible cut modes, namely:

- mulching and/or

- collecting by bag and/or

- side discharge and/or

- double cut,

According to a 30th aspect, dependent on the 29th aspect, the present invention relates to a method for obtaining at least one predictive piece of information relating to a turfgrass, wherein the method further comprises the step of determining, as a function of the selected cut mode and optionally according to the humidity forecast, a rest time and/or a recovery time recommended for said turfgrass after a cutting operation.

According to a 31st aspect, dependent on the 29th aspect or on the 30th aspect, the present invention relates to a method for obtaining at least one predictive piece of information relating to a turfgrass, wherein the method further comprises the step of estimating the electricity or the fuel consumed by said hand-guided lawnmower in each cutting operation.

According to a 32nd aspect, dependent on anyone of the previous aspects, the present invention relates to a method for obtaining at least one predictive piece of information relating to a turfgrass, wherein the step of making said at least one predictive piece of information and/or said at least one daily suggestion explicit is further comprised.

According to a 33rd aspect, dependent on the 32nd aspect, the present invention relates to a method for obtaining at least one predictive piece of information relating to a turfgrass, wherein said at least one predictive piece of information and/or said at least one daily suggestion are made explicit by displaying it on a dedicated user interface.

According to a 34th aspect, dependent on the 32nd aspect or on the 33rd aspect, the present invention relates to a method for obtaining at least one predictive piece of information relating to a turfgrass, wherein said at least one predictive piece of information and/or said at least one daily suggestion are made explicit using predefined icons.

According to a 35th aspect, the present invention relates to a system configured or configurable for implementing the method for obtaining at least one predictive piece of information relating to a turfgrass according to anyone of the previous aspects.

According to a 36th aspect, the present invention relates to a system configured or configurable for implementing the method according to anyone of the aspects from the 1st aspect to the 35th aspect.

According to a 37th aspect, the present invention relates to a program code that is capable, when performed by a control unit, of causing the implementation of the method according to anyone of the aspects from the 1st aspect to the 35th aspect.

According to a 38th aspect, the present invention relates to a physical or virtual support capable of memorizing the program code according to the 37th aspect.

In addition to the following detailed description, the aforementioned aspects will become even clearer by means of the figures that accompany this detailed description, wherein:

- Figure 1 is a block diagram representing an embodiment of the present invention;

- Figure 2A is a block diagram representing a first decision tree conceivable within the scope of the present invention;

- Figure 2B is a block diagram representing a second decision tree conceivable within the scope of the present invention;

- Figure 2C is a block diagram representing a third decision tree conceivable within the scope of the present invention;

- Figure 3A is a representation of a first user interface which can be obtained within the scope of the present invention and

- Figure 3B is a representation of a second user interface which can be obtained within the scope of the present invention.

The present invention relates to a method for obtaining at least one predictive piece of information relating to a turfgrass. More specifically, such predictive information includes the grass growth of the turfgrass to which the method refers.

The method according to the present invention can advantageously make use of network technologies and can be implemented in the form of an algorithm that can be executed by one or more control and/or computation units. According to an embodiment of the present invention, the method according to the present invention can make use of the so-called "cloud computing", whereby the algorithm for the implementation of the method according to the present invention can be performed in the cloud, or by computational means available remotely. According to a further embodiment of the present invention, the method according to the present invention can make use of the computational capacity of control devices installed on mobile devices, so that the algorithm for the implementation of the method according to the present invention can be executed by control devices installed on mobile devices, such as a smartphone or a tablet. Although the embodiments described herein are likely to be the most advantageous, they are not intended to be restrictive. In particular, it can also be provided that the one or more control and/or computation units which make it possible to execute the algorithm for the implementation of the method according to the present invention, are then suitable for generating suggestions and/or commands, being the former (i.e. the suggestions) eventually made explicit to a user, in particular by means of a dedicated user interface displayed on a screen of a mobile device, such as a smartphone or a tablet, while the latter (i.e. the commands) being eventually transmitted to the control unit of a device for the maintenance of the turfgrass, in particular to the control unit of a self-driving robotic lawnmower.

A first step of the method according to the present invention provides to set the geographic position of the turfgrass for which the method aims to obtain the predictive piece of information, in particular the grass growth. This geographic position is advantageously expressed or converted in the form of the absolute geographic coordinates (latitude and longitude) of the turfgrass. Since the geographic position is obviously an invariant, the first step of the method according to the invention does not need to be repeated, except when, for example, there is a variation in the turfgrass of interest. Therefore the first step of the method according to the invention does not categorically require to be performed recursively or iteratively, being possible for example to perform it all at once in an initial installation procedure.

The step of setting the geographic position of the turfgrass of interest can be differently implemented. According to a first embodiment, a user advantageously makes use of a dedicated user interface available for example on a mobile device such as a smartphone or a tablet (as well as means for data entering, such as a physical keyboard or a touch keyboard), to enter the absolute geographic coordinates of the turfgrass of interest. In particular, the user enters the latitude values (for example latitude=43°20'29"76 N, or 43.3416 N if expressed in decimal degrees) and the longitude values (for example longitude=12°54'29"52 E, or 12.9082 E if expressed in decimal degrees) of the turfgrass of interest.

According to a second embodiment, a user, once again advantageously making use of a dedicated user interface available for example on a mobile device such as a smartphone or a tablet, enters a geographic reference corresponding to the geographic position of the turfgrass of interest.

If, for example, the turfgrass of interest is the turfgrass of Prato della Valle in Padua (Italy), the user manually enters a string such as "Prato della Valle, Padua, Italy" and the method according to the present invention contemplates that this string is automatically converted into the corresponding geographic coordinates (i.e. 45°23'54"N and 11°52'33"E). If, as another example, the turfgrass of interest is located in Via del Lavoro 6, Castelfranco Veneto (Italy), the user manually enters a string containing this address and the method according to the present invention contemplates that this string is automatically converted into the geographic coordinates of that address. It should be noted that, in accordance with the present invention, a particularly high accuracy about the geographic position of the turfgrass is not necessary, as it is sufficient to provide the indication of the town only where the turfgrass of interest is located (therefore the user, in the previous example, could also have entered a string containing just the town of Castelfranco Veneto).

According to a third embodiment, a user, once more advantageously making use of a dedicated user interface available for example on a mobile device such as a smartphone or a tablet, identifies the location of the turfgrass of interest on a virtual map (for example on a map of the Google Maps service by Google Inc.). For example, the user can apply a placeholder to the virtual map as a marker of the geographic position of the turfgrass of interest and the method according to the present invention provides that this marker is automatically converted into the corresponding geographic coordinates.

According to a fourth embodiment, the step of setting the geographic position of the turfgrass of interest can provide (in particular during an initial installation procedure) the detection of the geographic position of such turfgrass by means of an associated sensor device. Specifically, the detection of the geographic position of the turfgrass of interest can be carried out by means of a GNSS (Global Navigation Satellite System) global satellite position detector, preferably according to the GPS (Global Positioning System) technology. Advantageously, if a self-driving robotic lawnmower is used for the maintenance of the turfgrass of interest and this self-driving robotic lawnmower also has a GNSS global satellite position detector to allow position control, said GNSS global satellite position detector integrated in the sensor device can be advantageously used as a sensor device for detecting the geographic position of the turfgrass of interest.

According to a fifth embodiment, not being necessary to have a particularly high degree of accuracy about the geographic position of the turfgrass of interest, the step of setting the geographic position of the turfgrass of interest can include (in particular during an initial installation procedure) the detection of the geographic position of a mobile device, such as a smartphone or a tablet (assuming that during the initial installation procedure this mobile device is in correspondence with or in proximity to the turfgrass of interest).

A second step of the method according to the present invention provides that a time span of interest is defined. This time span includes a predefined number of days, for example equal to seven days. Alternatively, this time span includes a number of days that can be set by a user, who can advantageously make use of a dedicated user interface, available for example on a mobile device, such as, for example, a smartphone or a tablet, for choosing the number of days of the time span of interest. In this alternative requiring the user to establish the number of days of the time span of interest, restrictions may be provided (for example, the number of days of the time span cannot be less than three days and greater than ten days, or it cannot be less than five days and greater than eight days). The choice of the number of days of the time span of interest is made in particular by the user during an initial installation procedure. Advantageously, the user is in any case free to make subsequent modifications.

Preferably, the time span of interest is defined through a first array [0,..., i,..., n], whose elements are precisely represented by the days of the time span of interest. Assuming, as an example, that the first array [0, ..., i, ..., n] is created on 9th August and that the number of days of the time span of interest (predefined or set by the user) is equal to seven (thus the index n is equal to 6), the first array is therefore defined as follows: [9th August, 10th August, 11th August, 12th August, 13th August, 14th August, 15th August]. Alternatively, the elements of the first array can be expressed as days of the week, so that, assuming, as another example, that the first array [0, ..., i, ..., n] is created on Monday and that the number of days of the time span of interest is always equal to seven (n = 6), the first array is therefore defined as follows: [Monday, Tuesday, Wednesday, Thursday, Friday, Saturday, Sunday].

Advantageously, the first array [0,..., i,..., n] is updated daily. In particular, this daily update provides that the element of the first array in position i fills the previous position i-1, with the deletion from the first array of the element in position 0 and the introduction of a new element in the first array at position n. In the example above, the first daily update provides that the first array [9th August, 10th August, 11th August, 12th August, 13th August, 14th August, 15th August] is updated into [10th August, 11th August, 12th August, 13th August, 14th August, 15th August, 16th August]. For the purpose, inter alia, of being able to carry out daily updates, the first array [0, ..., i, ..., n] is particularly suitable for being dynamically allocated in memory cells (in particular in dedicated memory cells available in the cloud and operationally connected to the computational means also available in the cloud or in memory cells available on a mobile device, such as for example a smartphone or a tablet, and operationally connected to the control device of the mobile device).

A third step of the method according to the present invention provides that, for each day of the time span of interest, one or more meteorological parameters relating to the geographic position of the turfgrass are acquired. The method according to the present invention, for the execution of this third step, makes use of the availability of meteorological services accessible through a remote communication network (in particular the internet network).

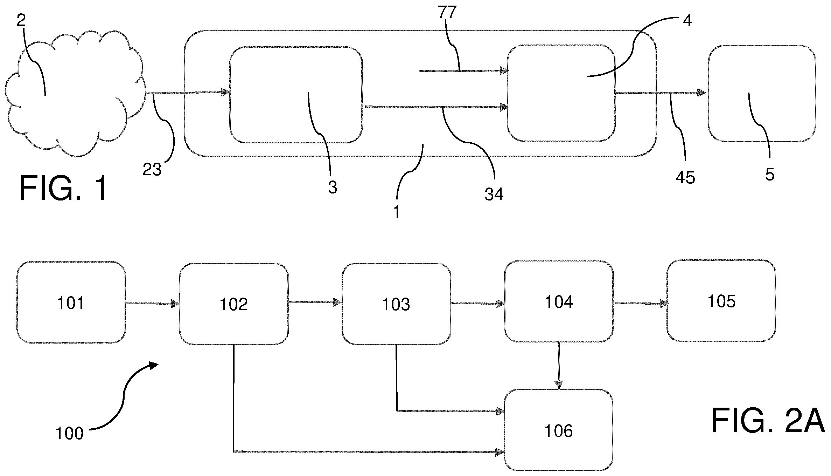

Advantageously, the third step of the method according to the present invention in fact provides for the reception of a data package from at least one meteorological service, from which it is possible to extract and/or obtain the meteorological parameters relating to the geographic position of the turfgrass. This reception is schematically represented in Figure 1, the representation in Figure 1 being based (purely by way of an explicative and not limitative example) on the embodiment of the present invention implemented by an algorithm executed by remote computing means. In fact, the block referred to by reference number 1 indicates a cloud wherein a plurality of computation modules are located. The block referred to by reference number 2 instead indicates a meteorological service accessible via the internet. The arrow referred to by reference number 23 indicates the transmission (via the internet network) of a data package from the meteorological service 2 to a computation module 3 integral to cloud 1 and configured to extract and/or to obtain the meteorological parameters relating to the geographic position of the turfgrass starting from this data package.

Advantageously, the computation module 3 is operatively connected not only to the meteorological service 2, but also to one or more further meteorological services, receiving a respective data package from each meteorological service. In this circumstance, the computation module 3 is operationally configured to carry out comparison operations and/or synthesis operations between the data packages received, so as to obtain meteorological parameters which are as reliable and solid as possible.

Advantageously, the computation module 3 has special APIs (Application Programming Interface) and it is in particular configured to forward to the meteorological service 2 (or, if it is connected to a plurality of meteorological services, to each of them) requests to send the data package (or data packages). Preferably, the requests are forwarded with a predetermined frequency. In particular, one request can be sent per day or several requests can be forwarded per day (for example one request every three hours), if having constantly updated data packages is considered appropriate, in order to increase the reliability of the meteorological parameters obtained.

The third step of the method according to the present invention provides that the expected average temperature relating to the geographic position of the turfgrass is acquired for each day of the time span of interest. In fact, the Applicant has experimentally verified, thanks to repeated tests carried out on turfgrasses located in different climatic zones, that the average temperature is the parameter which most appreciably affects grass growth.

Therefore, the method according to the present invention preferably contemplates that the meteorological parameters extracted and/or obtained from the computation module 3 comprise a second array [Temp_m(0), ..., Temp_m(i), ..., Temp_m(n)], whose elements are represented by the average temperatures (Temp_m) expected on each day of the time span of interest in correspondence with the geographic position of the turfgrass of interest. Referring to the previous example, wherein the first array [0, ..., i, ..., n] is created on 9th August and wherein the number of days of the time span of interest is equal to seven (n=6), the second array with the average temperatures of each day of the time span of interest is therefore defined as follows: [Temp_m(9th August), Temp_m(10th August), Temp_m(11th August), Temp_m(12th August), Temp_m(13th August), Temp_m (14th August), Temp_m(15th August)].

Advantageously, the second array [Temp_m(0),..., Temp_m(i),..., Temp_m(n)] is updated daily. In particular, this daily update provides that the element of the second array in position i fills the previous position i-1, with the deletion from the second array of the element in position 0 and the introduction of a new element in the second array at position n. In the example above, the first daily update provides that the second array [Temp_m(9th August), Temp_m(10th August), Temp_m(11th August), Temp_m(12th August), Temp_m(13th August), Temp_m(14th August), Temp_m(15th August)] is updated into [Temp_m(10th August), Temp_m(11th August), Temp_m(12th August), Temp_m(13th August), Temp_m(14th August), Temp_m(15th August), Temp_m(16th August)]. For the purpose, inter alia, of being able to carry out daily updates, the second array [Temp_m(0),..., Temp_m(i),..., Temp_m(n)] is particularly suitable for being dynamically located in memory cells.

A fourth step of the method according to the present invention provides that at least one predictive piece of information relating to the turfgrass of interest is calculated starting from one or more meteorological parameters relating to the geographic position of the turfgrass of interest that have been previously acquired in the third step of the method according to the present invention.

The fourth step of the method according to the present invention provides that the at least one predictive piece of information calculated on the basis of one or more meteorological parameters includes the estimated grass growth of the turfgrass of interest on each of the days of the time span of interest. This estimated grass growth can be expressed in absolute terms (for example by determining the predicted grass height variation in millimeters) or in relative terms (for example by determining the expected grass height variation with respect to a maximum height variation that would occur if the environmental conditions necessary for optimal grass growth existed).

Advantageously, within the scope of the present invention (according to which the average temperature is considered to be the parameter that most considerably affects grass growth), a dimensionless parameter called "growth potential" (GP) can be used and it can have a value between 0 (when no grass growth is possible) and 1 (when the average temperature is at its ideal value to achieve optimal grass growth). The growth potential takes into account, in addition to the predicted average temperature, also the grass type of the turfgrass of interest, if C3 (micro-therm) or C4 (macro-therm).

It should be remembered that the so-called "micro-therm" (C3) type includes the species of grass which have particularly acclimatized to predominantly cold-humid climates (they are therefore widespread, for example, in Northern Europe) and which generally have a range of optimal temperatures for the growth of the aerial vegetative part between 16°C and 24°C. On the other hand, it should be remembered that the so-called "macro-therm" (C4) type includes the species of grass which have particularly acclimatized to warm climates (they are therefore widespread, for example, in Southern Europe) and which generally have a range of optimal temperatures for the growth of the aerial vegetative part between 27°C and 35°C.

A mathematical equation for calculating the growth potential, which is particularly suitable to be used within the scope of the present invention, is the one that can be read in the scientific article "Using temperature to predict turfgrass growth potential (GP) and to estimate turfgrass nitrogen use", by Micah Woods (this article is available online at http://www.files.asianturfgrass.com/201306 growth potential.pdf):

$$GP = e^{-0.5\left(\frac{t-t_o}{var}\right)^2}$$

wherein:

- GP is the growth potential;
- e is the mathematical constant that is the base of the natural logarithm, having an approximate value of 2.71828;
- t is the average temperature value, expressed in °C;
- $t_0$ is a fixed temperature value, equal to 20°C for the micro-therm type and 31°C for the macro-therm type;
- var is a constant, equal to 5.5 for micro-therm type and 7 for the macro-therm type.

Advantageously, the method according to the present invention preferably contemplates that the estimated grass growth of the turfgrass of interest on each day of the time span of interest is expressed by means of a third array [GP(0), ..., GP(i),..., GP(n)]. The elements of the third array may be the predicted growth potential GP values for the grass of the turfgrass of interest on each day of the time span of interest. Alternatively, the elements of the third array can be the values (expressed for example in mm) of the predicted daily variation of the grass height of the turfgrass on each day of the time span of interest. According to a further alternative, the elements of the third array can be the values (expressed for example in mm) of the predicted cumulative variation of the grass height of the turfgrass on each day of the time span of interest, wherein predicted cumulative variation of the grass height on day i means the sum of the predicted daily variations in grass height from day 0 to day i.

The method according to the present invention allows, among other things, to predict when the grass of the turfgrass of interest enters dormancy or exits dormancy, dormancy being the physiological condition of stability necessary for the grass to overcome adverse climatic conditions or in any case unsuitable conditions for vegetative growth. In particular, the entry into dormancy can be predicted by detecting the date on which the growth potential GP switches from a value other than zero to a value equal to zero. On the contrary, the exit from dormancy can be predicted by detecting the date when the growth potential GP switches from a value equal to zero to a value other than zero.

Referring to the previous example, wherein the first array and the second array comprise respectively the elements [9th August, 10th August, 11th August, 12th August, 13th August, 14th August, 15th August] and [Temp_m(9th August), Temp_m(10th August), Temp_m(11th August), Temp_m(12th August), Temp_m(13th August), Temp_m(14th August), Temp_m(15th August)], it happens that the third array includes the elements [GP(9th August), GP(10th August), GP(11th August), GP(12th August), GP(13th August), GP(14th August), GP(15th August)].

Advantageously, the third array [GP(0),..., GP(i),..., GP(n)] is updated daily. In particular, this daily update provides that the element of the third array in position i fills the previous position i-1, with the deletion from the third array of the element in position 0 and the introduction of a new element in the third array at position n. In the example above, the first daily update provides that the third array [GP(9th August), GP(10th August), GP(11th August), GP(12th August), GP(13th August), GP(14th August), GP(15th August)] is updated into [GP(10th August), GP(11th August), GP(12th August), GP(13th August), GP(14th August), GP(15th August), GP(16th August)]. For the purpose, inter alia, of being able to carry out daily updates, the third array [GP(0),..., GP(i),..., GP(n)] is particularly suitable to be dynamically allocated in memory cells.

The generation of the third array [GP(0), ..., GP(i), ..., GP(n)] in the fourth step of the method according to the present invention starting from the second array [Temp_m(0), ... , Temp_m(i), ..., Temp_m(n)] is represented schematically in Figure 1, from which it can be appreciated that the computation module 3 transmits to the computation module 4, also integral to the cloud 1, the second array [Temp_m(0),..., Temp_m(i),..., Temp_m(n)] with the average temperature values in correspondence of the geographic position of the turfgrass of interest for each day of the time span of interest (such transmission being indicated by the arrow 34). The computation module 4 then obtains the third array [GP(0), ..., GP(i), ..., GP(n)] starting from the second array [Temp_m(0), ..., Temp_m(i), ..., Temp_m(n)], for example by using the mathematical equation above to calculate the growth potential (GP).

According to an advantageous embodiment, the method according to the present invention can provide that one or more corrective factors are taken into account for the calculation of the at least one predictive piece of information based on one or more meteorological parameters. In particular, since the Applicant has verified with experimental tests that further factors (in addition to the average temperature) affect and/or produce effects on grass growth, the third array [GP(0), ..., GP(i), ..., GP(n)] is generated not only on the basis of the second array [Temp_m(0), ..., Temp_m(i), ..., Temp_m(n)], but also on the basis of a corrective array [correction(0), ..., correction(i),..., correction(n)]. From the schematic representation of Figure 1 it can be appreciated that the computation module 4, in addition to receiving the values of the elements of the second array [Temp_m(0), ..., Temp_m(i), ..., Temp_m(n)] via a first of its inputs, also receives the values of the elements of the corrective array [correction(0), ..., correction(i), ..., correction(n)] via a second of its inputs (see arrow 77), so as to define the values of the elements of the third array [GP(0), ..., GP(i), ..., GP(n)] by appropriately processing the values of the elements of the second array [Temp_m(0),..., Temp_ m(i),..., Temp_m(n)] and the values of the elements of the corrective array [correction(0),..., correction(i),..., correction(n)].

In particular, this opportune processing can provide that the values of the elements of the second array [Temp_m(0), ..., Temp_m(i), ..., Temp_m(n)] are combined with the values of the elements of the corrective array [correction(0), ..., correction(i), ..., correction(n)], for example by means of a multiplication operation, or that the values of the elements of the second array [Temp_m(0), ..., Temp_m(i), ..., Temp_m(n)] are modified according to the values of the elements of the corrective array [correction(0), ..., correction(i), ..., correction(n)], based on one or more predefined mathematical relations. The corrective array [correction (0), ..., correction(i), ..., correction(n)] is updated daily in a similar way to the second array [Temp_m(0), ..., Temp_m(i), ..., Temp_m(n)] and is particularly suitable for being dynamically allocated in memory cells.

Preferably, the present invention contemplates taking into consideration a plurality of corrective factors for the calculation of at least one predictive piece of information on the basis of one or more meteorological parameters, in particular for defining the values of the elements of the third array [GP(0),..., GP(i),..., GP(n)].

Advantageously, this plurality of corrective factors comprises a first corrective factor correlated to the insufficiency or excess of water, since it is easy to understand how both conditions can have a negative impact on grass growth. For the quantification of that first corrective factor, it can be taken into account, as well as data received from one or more meteorological services (from which parameters such as the probability of rainfalls and possibly the magnitude of such rainfalls are extractable and/or obtainable), also information provided by a user who, using proper means for data entering, associated with a user interface, communicates the occurrence of the irrigation operations of the turfgrass (and possibly also the importance of each of these operations of irrigation). If the possible irrigation is carried out by means of an electronically controlled system, the quantification of the first corrective factor can preferably take into account information and/or signals concerning the activations of the irrigation system (and possibly also the quantity of water provided in each of these activations).

Advantageously, this plurality of corrective factors includes (alternatively or preferably in combination with the first corrective factor) a second corrective factor correlated to the insufficiency or excess of solar irradiation. Given that the grass needs to have a minimum number of daily hours of direct sunlight in order to grow lushly, if this minimum number of hours cannot be reached (due to the cloud covering), grass growth would be negatively affected. On the other hand, if direct sunlight is excessive, in the summer months the grass can be damaged by the consequent dryness and therefore have reduced growth. To quantify this second corrective factor, data received from one or more meteorological services can be taken into account (from which parameters such as the probability of clear skies or cloud covering during the day are extractable and/or obtainable).

Advantageously, this plurality of corrective factors includes (alternatively or preferably in combination with the first corrective factor and/or the second corrective factor) a third corrective factor correlated to insufficient fertilizer administration. Given that the optimal maintenance of turfgrass would include the administration of fertilizer approximately once a month, a lower frequency of fertilizer administration negatively affects grass growth because the grass does not have an adequate quantity of nutrients (mainly nitrogen and phosphorus). For the quantification of this third corrective factor, it is possible to take into account the information provided by a user who, using proper means for data entering, associated with a dedicated user interface, communicates the occurrence of the operations for the administration of fertilizer to the turfgrass (and possibly the type of substances administered).

The Applicant has experimentally found that the first corrective factor, the second corrective factor and the third corrective factor assume values between 0.2 and 0.5. Advantageously, the present invention provides for generating an array relating to the first corrective factor [correction_1(0), ..., correction_1(i), ..., correction_1(n)], whose elements include the values of the first corrective factor in the time span of interest, an array relating to the second corrective factor [correction_2(0), ..., correction_2(i), ..., correction_2(n)], whose elements include the values of the second corrective factor in the time span of interest, and an array relating to the third corrective factor [correction_3 (0),..., correction_3(i),..., correction_3(n)], whose elements include the values of the third corrective factor in the time span of interest. Advantageously, once the arrays relating to the three corrective factors have been generated, the present invention further provides to generate the corrective array [correction(0), ..., correction(i), ..., correction(n)] after an operation of comparison between the arrays related to the three corrective factors. Preferably, the comparison operation is such that, for each day of the time span of interest, the corrective factor having the greatest value is preferred. In other words, the element correction(i) of the corrective array is assumed equal to correction_1(i) if correction_1(i) is greater than both correction_2(i) and correction_3(i), it is assumed equal to correction_2(i) if correction_2(i) is greater than both correction_1(i) and correction_3(i) and is assumed to be equal to correction_3(i) if correction_3(i) is greater than both correction_1(i) and correction_2(i).

As it is not known beforehand whether the grass of the turfgrass for which the at least one predictive piece of information is to be calculated is micro-therm or macro-therm type (for example, Central European gardens have both types of grass), according to an advantageous embodiment, the method according to the present invention can provide that the estimated grass growth of the turfgrass of interest is calculated on the basis of one or more meteorological parameters (and possibly of the corrective factors) first assuming that such grass is micro-therm type and then assuming that such grass is macro-therm type.

In particular, if the expected grass growth of the turfgrass of interest is expressed by means of the growth potential (GP), both a micro-therm grass growth array [GP_micro(0), ..., GP_micro(i), ..., GP_micro(n)], using the aforementioned mathematical equation to calculate the growth potential and assuming the fixed temperature value to and the constant var respectively equal to 20°C and 5.5, and a macro-therm grass growth array [GP_MACRO(0), ..., GP_MACRO(i), ..., GP_ MACRO(n)], always using the aforementioned mathematical equation to calculate the growth potential, but assuming the fixed temperature value $t_0$ and constant var respectively equal to 31°C and 7, are generated.

Advantageously, once the growth arrays for the micro-therm grass type and for the macro-therm grass type have been generated, the present invention further provides to generate the third array [GP(0), ..., GP(i), ..., GP(n)] after a comparison operation between the arrays relating to the two different grass types. Preferably, the comparison operation is such that, for each day of the time span of interest, the preferred type of grass is the one which, given the estimated average temperature of that day (and possibly further given the corrective factors of that day), is estimated to have the greatest growth. In other words, the GP(i) element of the third corrective array is assumed equal to GP_micro(i) if GP_micro(i) is greater than GP_MACRO(i) and is instead assumed equal to GP_MACRO(i) if GP_MACRO(i) is greater than GP_micro(i).

According to an advantageous embodiment, the predictive information relating to the turfgrass of interest that the method according to the present invention aims to obtain includes (in combination or as an alternative to the grass growth of the turfgrass) the grass height of the turfgrass. Notably, this advantageous embodiment requires that at least one piece of information is provided relating to a current height of the grass of the turfgrass of interest.

The at least one piece of information relating to a current height of the grass of the turfgrass of interest can be provided by a user who, using proper means for data entering, associated with a dedicated user interface, communicates the occurrence of cutting operations performed on the turfgrass of interest, preferably in combination with at least one adjustment parameter of the used lawnmower, in particular the distance of the blade from ground. Alternatively, the at least one piece of information relating to a current height of the grass of the turfgrass of interest can be acquired by means of at least one sensor device. In particular, such at least one sensor device can be installed on board the lawnmower, in particular on board a self-driving robotic lawnmower. As possible examples of a sensor device suitable for detecting the height of the grass of a turfgrass, an optical sensor device or a capacitive sensor device or a virtual sensor device can be mentioned (purely for explanatory reasons but not as a limitation). It should be noted that the terms "virtual sensor device" are intended to refer to a sensor device capable of obtaining the height of the grass from the torque of the blade drive motor (or from the current consumption, in case it is an electric motor).

According to an advantageous embodiment, the use of a Kalman filter is provided in order to increase the accuracy of the predictive information relating to the turfgrass of interest calculated by means of the present invention. In particular, a Kalman filter can be implemented by the computation module 4 responsible for generating the third array [GP(0),..., GP(i),..., GP(n)].

Preferably, the method according to the present invention provides for estimating the maximum height of the grass of the turfgrass of interest (expressed for example in millimeters or in height bands) on each day of the time span of interest. This maximum height can be advantageously expressed by means of a fourth array [h_max(0), ..., h_max(i), ..., h_max(n)], the elements of the fourth array [h_max(0), ..., h_max(i),..., h_max(n)] being the maximum heights expected for the grass of the turfgrass of interest on the days of the time span of interest. Referring to the previous example, wherein the first array, the second array and the third array respectively comprise the elements [9th August, 10th August, 11th August, 12th August, 13th August, 14th August, 15th August], [Temp_m(9th August), Temp_m(10th August), Temp_m(11th August), Temp_m(12th August), Temp_m(13th August), Temp_m(14th August), Temp_m(15th August)] and [GP(9th August), GP(10th August), GP(11th August), GP(12th August), GP(13th August), GP(14th August), GP(15th August)], it results that the fourth array includes the elements [h_max (9th August), h_max(10th August), h_max(11th August), h_max(12th August), h_max(13th August), h_max(14th August 14), h_max(15th August)].

Advantageously, the fourth array [h_max(0),..., h_max(i),..., h_max(n)] is updated daily. In particular, this daily update provides that the element of the fourth array in position i fills the previous position i-1, with the cancellation from the fourth array of the element in position 0 and the introduction of a new element in the fourth array at position n. In the example above, the first daily update provides that the fourth array [h_max(9th August), h_max(10th August), h_max(11th August), h_max(12th August), h_max(13th August), h_max(14th August), h_max(15th August)] is updated into [h_max(10th August), h_max(11th August), h_max(12th August), h_max(13th August), h_max(14th August), h_max(15th August), h_max(16th August)]. For the purpose, inter alia, to be able to carry out daily updates, the fourth array [h_max(0), ..., h_max(i), ..., h_max(n)] is in particular suitable to be dynamically allocated in memory cells. The fourth array [h_max(0),..., h_max(i),..., h_max(n)] can be generated by the same computation module 4 (represented in Figure 1) capable of generating the third array [GP (0),..., GP(i),..., GP(n)]. Furthermore, what described above with reference to the generation of the third array [GP(0), ..., GP(i), ..., GP(n)] in order to improve the reliability of the related elements (and in particular the application of one or more corrective factors, the concomitant calculation for micro-therm type and by micro-therm type, the implementation of a Kalman filter) is also applicable to the generation of the fourth array [h_max(0), ..., h_max(i), ..., h_max(n)].

From Figure 1 it can be noticed that the third array [GP(0), ..., GP(i), ..., GP(n)] and/or the fourth array [h_max(0), ..., h_max(i), ... , h_max(n)] generated by the computation module 4 (and more generally any predictive information relating to the turfgrass of interest) are transmitted (see arrow 45) to at least one further computation module 5 integral to cloud 1 which implements one or more algorithms capable of conferring additional functions to the method according to the present invention, some of which will be described below.

It should be emphasized that, although computation modules 3, 4 and 5 integral to cloud 1 (respectively responsible for the acquisition of the meteorological parameters relating to the geographic position of interest, for the calculation of at least one predictive piece of information relating to the turfgrass of interest and for the implementation of one or more algorithms capable of conferring additional functions) have been represented as distinct modules, they can be integrated into a single computation module, in which case the inputs and outputs represented in Figure 1 (for example at the ends of arrows 34 and 45) are to be considered as logic inputs and as logic outputs.

In fact, alongside hardware implementation forms of the present invention, wherein the computation modules 3, 4 and 5 are obtained by means of processing units physically distinct from each other and operatively connected via a bus or a communication network, software implementation forms of the present invention can preferably be contemplated, wherein the computation modules 3, 4 and 5 are different routines performed by the same processing unit.

A first additional functionality made possible by the method according to the present invention is a smart and automated management of the turfgrass of interest. This first additional functionality makes use of the ability of the one or more control and/or computation units used for the implementation of the present invention (in particular of the computation module 5, according to the schematic representation of Figure 1) to prepare work programs of at least one device designed to operate on the turfgrass of interest, based on the at least one predictive piece of information relating to the turfgrass, in particular on the basis of the values of the elements of the third array [GP(0), ..., GP(i),..., GP(n)] and/or on the basis of the values of the elements of the fourth array [h_max(0),..., h_max(i),..., h_max(n)].

Advantageously, the method according to the present invention allows to schedule the activity of a device for cutting the grass of the turfgrass of interest, in particular of a self-driving robotic lawnmower, according to the values of the elements of the third array [GP(0),..., GP(i),..., GP(n)]. Once the scheduling has been defined, the one or more control and/or computation units used for the implementation of this invention then supervise the activations and/or deactivations and/or adjustments of the robotic lawnmower in accordance with this scheduling.

In particular, the robotic lawnmower can be activated only after a predetermined variation in the height of the grass of the turfgrass of interest, preferably in conjunction with further conditions, especially the absence of rainfalls. Furthermore, the robotic lawnmower can instead be activated more frequently, in this case being employed, concurrently with each activation, a different adjustment of at least one operating parameter of the robot lawnmower according to the values of the elements of the third array [GP(0),..., GP(i),..., GP(n)]. For example, a greater distance of the blade from the ground is employed on days when the growth potential (GP) takes higher values than on days when the growth potential (GP) takes more modest values.

Advantageously, the method according to the present invention is capable of estimating the daily consumption of electricity or fuel by the self-driving robotic lawnmower on the basis of the at least one predictive piece of information relating to the turfgrass, in particular on the basis of the values of the elements of the third array [GP(0), ..., GP(i), ..., GP(n)] and/or on the basis of the values of the elements of the fourth array [h_max(0),..., h_max(i),..., h_max(n)]. In fact, relatively higher values of the growth potential (GP) require a higher frequency of activations of the robotic lawnmower and/or the mowing of taller grass (therefore the activation of the blade of the robotic lawnmower has a higher energetic cost, being the blade subjected to a higher friction during its rotation). Advantageously, the scheduling of the activity of the robotic lawnmower can be defined not only on the basis of the values of the elements of the third array [GP(0),..., GP(i),..., GP(n)], but also according to criteria for optimizing or limiting the consumption of the robotic lawnmower.

Alternatively or in addition to the device for cutting the grass of the turfgrass of interest, in particular self-driving robotic lawnmower, the present invention allows to set work programs for at least one further device designed for operating on the turfgrass of interest, on the basis of at least one predictive piece of information relating to the turfgrass, in particular taking into account the values of the elements of the third array [GP(0), ..., GP(i), ..., GP(n)] and/or the values of the elements of the fourth array [h_max(0),..., h_max(i),..., h_max(n)].

Advantageously, the method according to the present invention allows to define a scheduling of the activity of a system for the irrigation of the turfgrass of interest or a system for the administration of fertilizer to the turfgrass of interest, setting the appropriate adjustments. In particular, as regards the irrigation system, the method according to the present invention makes it possible, for example, to inhibit the activation of this system on the day after a day with heavy rainfall or to have a longer activation time and/or an increase in the flow of water delivered on days with a higher average temperature. On the other hand, as regards the fertilizer administration system, the method according to the present invention makes it possible for example to inhibit the activation of such system in periods when the average temperature is too high or to appropriately postpone the activation of such system to some subsequent day, if initially planned on a day with heavy rainfall.

Advantageously, the method according to the present invention can estimate the daily consumption of electricity and water by the irrigation system, in particular also taking into consideration the values of the elements of the third array [GP(0) ,..., GP(i),..., GP(n)] and/or the values of the elements of the fourth array [h_max(0),..., h_max(i),..., h_max(n)]. Advantageously, when scheduling the activity of the irrigation system, also criteria for optimizing or limiting the relative electricity and water consumption play a role.

In a particularly advantageous embodiment, the present invention provides for the preparation of work programs of a robotic lawnmower and an irrigation system designed to operate on the same turfgrass of interest, so that the overall consumption of resources (in particular of electricity) is optimized. In fact, the administration of large quantities of water by means of the irrigation system would promote a particularly rapid grass growth, with the consequent need to carry out a greater number of cutting operations by means of the robotic lawnmower and/or to leave a greater distance between the blade and the ground, which is less energy-efficient.

Furthermore, large quantities of water administered by the irrigation system increase the formation of mosses and weeds, which are expensive to eradicate. On the contrary, a modest administration of water by means of the irrigation system would damage the grass and therefore, inter alia, would make it necessary to carry out subsequent remedial actions (for example, administration of substances). Therefore, according to the present invention, taking into account the at least one predictive piece of information calculated on the basis of said one or more meteorological parameters, activations and/or deactivations and/or adjustments of the irrigation system are programmed, so as to obtain grass growth of the turfgrass of interest that is on the one hand sufficient to guarantee an optimal state of health of the grass and consequently to obtain a neat, tidy and harmonious turfgrass, but on the other hand not at a level such as to cause too rapid grass growth and consequently considerable consumption of electricity or fuel by the robotic lawnmower. In a more general embodiment of the present invention, it is also possible to achieve a sort of modulation of the activations and/or deactivations and/or adjustments of the robotic lawnmower and of the irrigation system depending on the main result to be obtained, therefore the optimization of the aesthetic appearance of the turfgrass or the optimization of resource consumption.

A second additional functionality made possible by the method according to the present invention is a generation of one or more suggestions beneficial to a user of the turfgrass of interest which takes into account the at least one predictive piece of information relating to the turfgrass, in particular the values of the elements of the third array [GP(0), ..., GP(i), ..., GP(n)] and/or of the values of the elements of the fourth array [h_max(0), ..., h_max(i),..., h_max(n)]. The one or more suggestions are made explicit to the user after they have been generated, preferably in combination with the at least one predictive piece of information relating to the turfgrass. Advantageously, the one or more suggestions are made explicit by displaying it on a dedicated user interface, adopting in particular predefined icons. Preferably, this display occurs on a screen of a mobile device, such as for example a smartphone or a tablet (in particular also equipped with means for data entering, for example of the touch-type, capable of giving a user the ability to interact), wherein a dedicated software application (app) is advantageously installed.

This second additional functionality makes use of the capacity of one or more control and/or computation units used for the implementation of the present invention (in particular of the computation module 5 integral to cloud 1, according to the schematic representation of Figure 1, or of the control device of the mobile device) to process input data and or information, in particular the at least one predictive piece of information relating to the turfgrass, in order to generate useful output suggestions for a user.

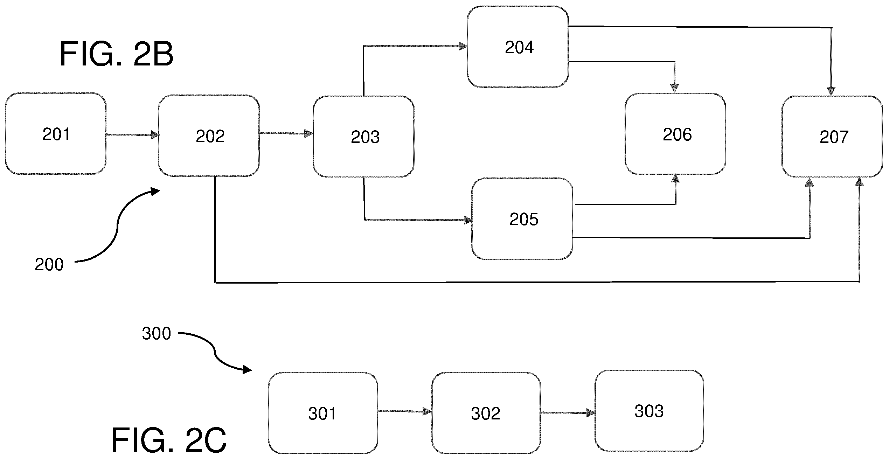

According to the present invention, the one or more suggestions beneficial to a user of the turfgrass of interest are generated on the basis of the at least one predictive piece of information relating to the turfgrass, in particular on the basis of the values of the elements of the third array [GP(0),..., GP(i),..., GP(n)] and/or on the basis of the values of the elements of the fourth array [h_max (0),..., h _max(i),..., h_max(n)], using one or more decision trees. Examples of such decision trees 100, 200 and 300 conceivable within the scope of the present invention are illustrated (purely for explanatory reasons but not as a limitation) in the block diagrams of Figures 2A, 2B and 2C.

The decision tree 100 in Figure 2A allows the determination of an appropriate day on which to carry out a cutting operation of the grass of the turfgrass of interest, as a function of meteorological parameters relating to the geographic position of interest, as a function of the estimated grass growth of the turfgrass of interest and optionally depending on the ascertained availability or unavailability of a user (in particular after having consulted an online calendar).

Block 101 is a block for estimating the height of the grass of the turfgrass of interest by means of the method according to the present invention. Block 102 is a comparison block wherein the estimated height of the grass is compared with a first threshold representing the minimum height for performing a cutting operation, the value of this first threshold being, for example, 5 mm. If the comparison in block 102 has a favorable outcome (estimated height of the grass greater than or equal to the first threshold), one moves on to block 103 which is a further block of comparison, wherein the estimated probability of rainfalls is compared with a relative threshold that represents the probability of rainfalls beyond which it is not recommended to perform grass cutting operations. Advantageously, the value of this second threshold is set differently according to the geographic area where the turfgrass of interest is located. For example, it is plausible to foresee a higher second threshold value for England than for Italy, since England is in a much more rainy geographic area than Italy. If the comparison referred to in block 103 has a favorable outcome (probability of rainfall minor than or equal to the second threshold), one moves on to block 104 which is an optional control block, wherein an investigation is made about the user's availability to perform a cutting operation on the turfgrass. Block 104 can be implemented by accessing an online service with a calendar function, such as the Google Calendar service by Google Inc.). If the investigation in block 104 is successful (the user who should perform the cutting operation is available), one moves on to block 105, which is a block generating a suggestion to perform a grass cutting operation of the turfgrass of interest on the day of the time span of interest to which the calculations in decision tree 100 refer. If at least one of the comparison in block 102, the comparison in block 103 and (optionally) the investigation in block 104 has no favorable outcome, one moves to block 106 which is a block for generating a suggestion not to perform any cutting operations of the grass of the turfgrass of interest on the day of the time span of interest to which the calculations in the decision tree 100 refer. Advantageously, the elaborations in the decision tree 100 are repeated for a different day of the time span of interest, preferably for the next day.

The decision tree 200 of Figure 2B allows the determination of an appropriate method of cutting the grass of the turfgrass of interest, as a function of meteorological parameters relating to the geographic position of interest, as a function of the estimated growth of the grass of the turfgrass of interest and according to the time. For explanatory reasons but not as a limitation, four different methods for cutting grass can be provided. A first method for cutting is mulching, according to which the grass clippings, being very fine, are left on the turfgrass, so that they can decompose in a relatively short period of time. A second method is collecting by bag, according to which the grass clippings are accumulated in a special bag, so that it can be disposed away from the turfgrass. A third method is side discharge, according to which the grass clippings, being too long even to be collected, are directed towards an accumulation area obtained on the turfgrass. A fourth method is double cut (alternative and generally preferable to side discharge), according to which a first cut takes place at a first height (for example equal to 80 mm) and then a second cut at a second height (for example equal to 50 mm), the grass clippings being collected with an appropriate bag.

Decision tree 200 in Figure 2B specifically refers to mulching. Block 201 is an estimation block of the grass height of the turfgrass of interest, by means of the method according to the present invention. Block 202 is a comparison block wherein the estimated height of the grass is compared with a first threshold representing the maximum possible height for mulching, wherein the value of this first threshold can be for example 10 mm. If the comparison in block 202 has a favorable outcome (estimated height of the grass less than or equal to the first threshold), one moves on to block 203 which is a further comparison block, wherein the estimated humidity is compared with a relative threshold representing the maximum possible humidity for mulching. If the comparison in block 203 has a favorable outcome (estimated humidity less than or equal to the second threshold), one moves on to block 204, while if the comparison in block 203 has no favorable outcome (estimated humidity greater than the second threshold), one moves to block 205. Blocks 204 and 205 are both blocks for checking the time with respect to a reference time span. However, while block 204 provides for an extended time slot including a good part of the hours of the day (for example from 9 am to 5 pm), block 205 provides a restricted time slot including only the hours of the day with greater solar irradiation (for example from 11 am to 2 pm). If the control in block 204 or block 205 has a favorable outcome (the time is favorable to perform mulching, considering the relative humidity), one moves on to block 206 which is a block generating a suggestion to mulch the grass of the turfgrass of interest on the day of the time span of interest to which the calculations in the decision tree 200 refer. If at least one of the comparison in block 202, the control in block 202 and the control in block 205 has no favorable outcome, one moves to block 207 which is a block generating a suggestion not to perform any mulching on the turfgrass of interest on the day of the time span of interest to which the calculations in the decision tree 200 refer.

Decision tree 200 in Figure 2B can alternatively refer to collection by bag. In this case, the first threshold in block 202 assumes a greater value (for example 80 mm) and the time slots in blocks 204 and 205 are more extended (for example, respectively from 9 am to 6 pm and from 11 am to 4 pm). Decision tree 200 in Figure 2B can alternatively refer to side discharge and/or double cut. In this case (since both side discharge and double cut are generally inadvisable), the comparison in block 202 has a favorable outcome when the estimated height of the grass of the turfgrass of interest has a greater value than the first threshold.

The decision tree 300 in Figure 2C allows the determination of appropriate rest and/or recovery time for the turfgrass of interest (during which it is advisable to avoid stepping on the turfgrass) after a cutting operation has been carried out.

Block 301 is a block for checking the cutting mode performed, in particular if a mulching operation or a different operation has been performed. Block 302 is a block for checking air humidity, in particular if the air humidity is greater than a threshold having a predetermined value. Block 303 is a block for generating a suggestion to a user to provide rest and/or recovery time of a predetermined duration to the turfgrass after having cut the grass, this predetermined duration assuming a first value (for example 120 minutes) if a mulching operation has been performed and if the humidity of the air is higher than the relative threshold, a second value (for example 60 minutes) if a mulching operation has been performed and if the humidity air is less than or equal to the relative threshold, a third value (for example 60 minutes) if an operation other than mulching has been performed and if the humidity of the air is greater than the relative threshold and a fourth value (for example for example 30 minutes) if an operation other than mulching has been performed and if the air humidity is less than or equal to the relative threshold.

It should be pointed out that decision trees 100, 200 and 300 represent possible examples of the decision trees conceivable within the scope of the present invention, further decision trees being also possible. For example, it is possible to provide a decision tree aimed at generating a suggestion to a user to recharge a cutting device (in particular of a hand-guided lawnmower), estimating the electric energy or the fuel consumed by that hand-guided lawnmower in each cutting operation, according to meteorological parameters relating to the geographic position of interest, the estimated grass growth of the turfgrass of interest and optionally the cutting method adopted in each cutting operation.

Advantageously, the present invention provides the preparation of a calendar, whose duration is equal to the time span of interest and therefore comprising a number of days equal to the number of elements of the first array [0, ..., i, ..., n], wherein for each day suggestions about the operations to be carried out for the optimal maintenance of the turfgrass of interest are given to a user. In particular, for the preparation of this calendar, inter alia, the decision trees in Figures 2A, 2B and 2C can be conveniently used, whereby it is possible to obtain information such as for example the appropriate days for carrying out cutting operations, the available mowing methods and the rest and/or recovery time of the turfgrass after cutting. Moreover, for the preparation of the calendar, at least one abstract associative data structure (commonly called "hash table" in computer jargon) can be conveniently implemented. Advantageously, the present invention also allows the calendar to be made explicit by displaying it (by means of dedicated user interfaces) in particular on a screen of a mobile device, such as for example a smartphone or a tablet.

On the mobile device, for example a smartphone or a tablet, a dedicated software application (app) is advantageously installed, which, inter alia, supervises the arrangement of dedicated user interfaces representative of the calendar, for example by conveniently organizing and/or placing predefined icons. The mobile device, for example a smartphone or a tablet, by means of which the calendar is made explicit, is in particular equipped not only with visualization means, but also with means for data entering, for example of the touch-type, which confer the ability to interact and allow a user to communicate that a maintenance operation on the turfgrass, in particular a cutting or irrigation operation, has been performed.

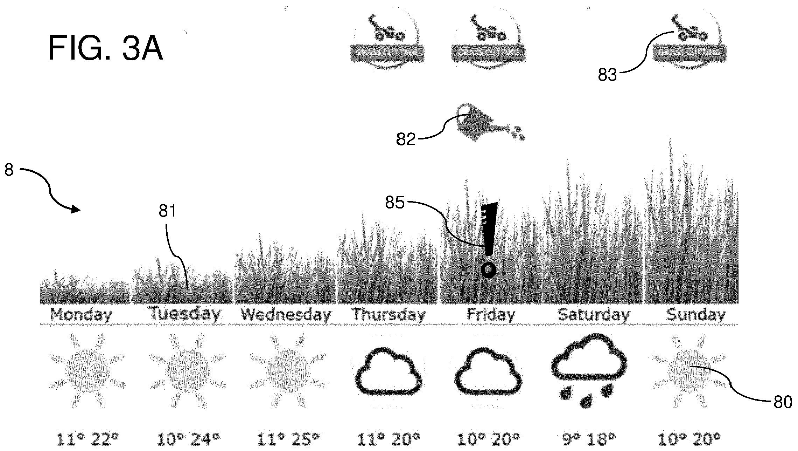

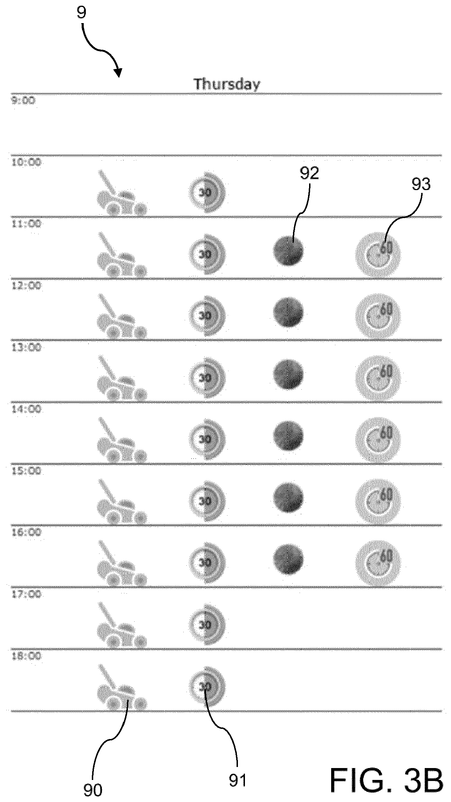

Figures 3A and 3B represent two examples (here offered purely for explanatory reasons and not as a limitation) of user interfaces through which the above calendar is made explicit, with the suggestions about the operations to be performed for the optimal maintenance of the turfgrass of interest on each day of the time span of interest. In particular, figure 3A and 3B are a pair of screenshots 8 and 9 which can be displayed on a mobile device, such as, for example, a smartphone or a tablet, when a specific software application (app) is running.

Screenshot 8 of Figure 3A (which may appear when the software application is started) is divided into columns, each dedicated to one day of the time span of interest. Since the days of the time span are equal to seven, each column can be identified by the name of the corresponding day of the week. Below the name of the day of the week, in each column of screenshot 8 an icon 80 representing the expected weather is displayed (sun icon on Monday, Tuesday, Wednesday and Sunday, overcast sky icon on Thursday and Friday, rain icon on Saturday), together with the expected minimum and maximum temperatures.

Immediately above the name of the day of the week, an icon 81 representing the estimated grass height of the turfgrass is displayed in each column on screenshot 8. Icon 81 has an increasing size from Monday to Sunday, the increasing size of icon 81 from one column to the next being substantially proportional to the growth of the grass from one day to the next. In the column corresponding to Friday there is an icon 85 with a special symbol indicating the possibility of grass deterioration, which is expected to have turned yellow (for lack of irrigation of the turfgrass), due to the lack of rainfalls in the preceding days.

At the top of screenshot 8 the suggestions given to a user are displayed by means of an icon 82 indicating the opportunity to irrigate the turfgrass and an icon 83 indicating the opportunity to mow the grass of the turfgrass. In particular, the grass of the turfgrass of interest is expected to reach on Thursday a height such that a cutting operation is recommended. The same suggestion is given on Friday, together with the suggestion to irrigate the turfgrass, given the expected yellowing of the grass. Since rain is expected on Saturday, no suggestions are given. Finally, mowing on Sunday is also suggested.

Screenshot 9 of Figure 3B (which can appear by selecting one of the columns of screenshot 8, in particular the screen that refers to Thursday) is instead divided into lines, each dedicated to one time slot of one day of the time span of interest, only daytime hours being displayed.

Screenshot 9 provides for the display of a specific icon 90 in correspondence of the time slots in which it is possible to carry out a mowing operation in collection by bag mode. Icon 90 is next to an icon 91 representing the suggested rest and/or recovery time (30 minutes) after having possibly mowed the grass in collection by bag mode. Screenshot 9 also provides for the display of a specific icon 92 in correspondence of the time slots in which it is possible to carry out a cutting operation in mulching mode. Icon 92 is next to an icon 93 representing the suggested rest and/or recovery time (60 minutes) after having possibly mowed the grass in mulching mode.

In light of the above detailed description, it is clear that the present invention achieves several important advantages. In particular, the present invention is of considerable help in maintaining turfgrass in an adequate state of health (even if not maintained by specialized personnel), optimizing the necessary use of time and of resources for the maintenance of the turfgrass so that it can remain in an adequate state of health. Furthermore, the present invention allows to manage lawns in an automatic and smart way and to provide users of the invention with suggestions highly effective for carrying out the correct maintenance of the turfgrass, as well as absolutely easy to consult and quickly understandable. The advantages of the present invention are fully achieved by the method as defined by the following claims and by possible variants thereof.

**Claims**

1. Method for obtaining at least one predictive piece of information relating to a turfgrass, comprising the steps of:

    a) establishing the geographic location of said turfgrass,
    b) defining a time span of interest,
    c) acquiring, for each day of said time span, one or more meteorological parameters related to said geographic location, said one or more meteorological parameters comprising particularly an expected average temperature, and
    d) calculating said at least one predictive piece of information on the basis of said one or more meteorological parameters, said at least predictive piece of information comprising the estimated growth of said turfgrass on each day of said time span.

2. Method according to claim 1, wherein said step a) comprises one of the sub-phases of:

    - manually entering at least one geographical coordinate or at least one geographical reference of said turfgrass by means of a dedicated user interface,
    - identifying the location of said turfgrass on a virtual map,
    - detecting the geographical position of said turfgrass by means of a sensor device, in particular by means of a global GNSS (Global Navigation Satellite System) satellite position detector, preferably according to the GPS (Global Positioning System) technology.

3. Method according to claim 1 or 2, wherein said step b) comprises the sub-step of creating a first array [0, ..., i, ..., n], the elements of said first array being the days of said time span, said first array extending therefore between a current date and an end date separated from said current date by a predetermined number of days, said first array being particularly suitable to be dynamically allocated in memory cells and to be updated daily, preferably wherein said predetermined number of days is comprised between three days and ten days, in particular between five days and eight days.

4. Method according to any one of the previous claims, wherein said step c) comprises the sub-step of creating a second array [Temp_m (0), ..., Temp_m (i), ..., Temp_m (n)], the elements of said second array being the average temperatures expected in the days of said time span at said geographical position, said second array being particularly suitable to be dynamically allocated in memory cells and to be updated daily.

5. Method according to any one of the preceding claims, wherein said step c) comprises the sub-step of receiving, in particular by means of a remote communication network, a data package from a meteorological service, said one or more meteorological parameters being extractable and/or obtainable from said data package.

6. Method according to any one of the previous claims, wherein said step d) comprises the sub-step of creating a third array [GP (0), ..., GP (i), ..., GP (n)], the elements of said third array being the expected daily variation or the expected cumulative variation of the height of said turfgrass on each day of said time span.

7. Method according to any one of the preceding claims, further comprising the step of acquiring at least one descriptive piece of information related to said turfgrass, said at least one descriptive piece of information comprising at least one of the following:

    - the current height of said turfgrass detected by means of a dedicated sensor device or entered manually by means of a dedicated user interface,
    - the signalling of an operation performed on said turfgrass and possibly of the type of such operation, said operation being particularly a cutting of said turfgrass or an irrigation of said turfgrass or a fertilization of said turfgrass.

8. Method according to any one of the previous claims, wherein said step d) comprises the sub-step of creating a fourth array [h_max (0), ..., h_max (i), ..., h_max (n)], the elements of said fourth array being the expected height of said turfgrass on each day of said time span.

9. Method according to any one of the preceding claims, wherein the type of grass of said turfgrass is taken into account for the calculation of said at least one predictive piece of information, in particular if C3 (micro-therm) or C4 (macro-therm) type,
preferably wherein said step d) comprises the sub-steps of:

- performing a first calculation of said at least one predictive piece of information assuming that the grass of said turfgrass is of C3 type,
- performing a second calculation of said at least one predictive piece of information assuming that the grass of said turfgrass is of C4 type,
- doing a comparison between said first calculation and said second calculation and
- obtaining said at least one predictive piece of information from said first calculation or from said second calculation on the basis of said comparison.

10. Method according to any one of the preceding claims, wherein one or more correction factors are taken into account for the calculation of said at least one predictive piece of information, said correction factors comprising in particular a first corrective factor, a second correction factor and a third correction factor, respectively related to the hydration of said turfgrass, to the solar irradiation of said turfgrass and to the fertilization of said turfgrass, preferably wherein said one or more correction factors are calculated and/or updated on a daily basis, and wherein in particular, in the event of concurrence of a plurality of correction factors, only the correction factor of greater significance and/or of higher value is taken into account for calculating said at least one predictive piece of information.

11. Method according to any one of the preceding claims, further comprising the step of scheduling, on the basis of said at least one predictive piece of information, an activation and/or an activation mode of at least one device designed to operate on said turfgrass, such as a device for cutting said turfgrass or a device for irrigating said turfgrass or a device for applying fertilizer to said turfgrass, preferably wherein in scheduling the activation and/or the activation mode of said at least one device, criteria are adopted for optimizing one or more resources including electricity, fuel, water and fertilizer.

12. Method according to any one of the preceding claims, wherein said at least one device is a self-driving lawnmower and said method is suitable for determining on which day or in which days of said time span said self-driving lawnmower should be activated on said turfgrass, preferably wherein said self-driving lawnmower is configured to allow adjustments of the cutting height of said turfgrass and said method is further adapted to determine the cutting height selected for each activation of said self-driving lawnmower.

13. Method according to any one of the preceding claims, further comprising the step of generating, on the basis of said at least one predictive piece of information, at least one daily suggestion about the opportunity or the inopportunity of performing one or more maintenance operations of said turfgrass, particularly a cutting of said turfgrass and/or an irrigation of said turfgrass and/or a fertilization of said turfgrass, and optionally about the preferred time or the preferred times to perform said one or more maintenance operations, preferably wherein one or more of the following factors contribute to the generation of said at least one daily suggestion:

- proven availability or proven unavailability of a user, in particular as a result of an online calendar consultation,
- probability of precipitation being lower or higher than a fixed threshold value or variable threshold value depending on said geographic position,
- expected humidity being lower or higher than a predetermined threshold and
- ascertained state of the grass of said turfgrass, in particular ascertained state of dormancy.

14. Method according to claim 13, wherein said at least one daily suggestion relates to possible cutting operations of said turfgrass by means of a hand-guided lawnmower and comprises an indication about the possible cut modes, namely:

- mulching and/or
- collecting by bag and/or
- side discharge and/or
- double cut,

preferably wherein the method further comprises the step of determining, as a function of the selected cut mode and optionally according to the humidity forecast, a rest time and/or a recovery time recommended for said turfgrass after a cutting operation and/or

preferably wherein the method further comprises the step of estimating the electricity or the fuel consumed by said hand-guided lawnmower in each cutting operation.

15. Method according to any one of the preceding claims, further comprising the step of making said at least one predictive piece of information and/or said at least one daily suggestion explicit, particularly by displaying it on a dedicated user interface (8, 9) and using preferably predefined icons (80, 81, 82, 83, 85, 90, 91, 92, 93).

FIG. 1

FIG. 2A

FIG. 2B

200

201 → 202 → 203 → 204 → 206 → 207
203 → 205 → 206
202 → 207

FIG. 2C

300

301 → 302 → 303

# FIG. 3A

EP 3 815 519 A1

9

Thursday

9:00

10:00

92

93

11:00

12:00

13:00

14:00

15:00

16:00

17:00

18:00

90

91

FIG. 3B

Europäisches
Patentamt

European
Patent Office

Office européen
des brevets

# EUROPEAN SEARCH REPORT

**Application Number**

EP 20 20 4400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/108104 A1 (HUSQVARNA AB [SE]) 7 July 2016 (2016-07-07) * the whole document * | 1-15 | INV. A01G20/00 A01G7/00 A01D34/00 |
| X | US 2017/181403 A1 (IMPERIALE-HAGERMAN STEPHEN MARIO [US]) 29 June 2017 (2017-06-29) | 1-5 | |
| A | * paragraph [0011] - paragraph [0071]; figures 1,2 * | 6-15 | |
| X | JP 2015 156809 A (OHBAYASHI CORP) 3 September 2015 (2015-09-03) * paragraph [0018] - paragraph [0086]; figures 1-5 * | 1 | |

**TECHNICAL FIELDS SEARCHED (IPC)**

A01G
A01F
A01D

The present search report has been drawn up for all claims

| Place of search | Date of completion of the search | Examiner |
|---|---|---|
| The Hague | 19 February 2021 | Vehrer, Zsolt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 4400

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2021

| Patent document cited in search report | | Publication date | Patent family member(s) | | Publication date |
|---|---|---|---|---|---|
| WO 2016108104 | A1 | 07-07-2016 | NONE | | |
| US 2017181403 | A1 | 29-06-2017 | AU 2016380877 | A1 | 19-07-2018 |
| | | | US 2017181403 | A1 | 29-06-2017 |
| | | | WO 2017116711 | A1 | 06-07-2017 |
| JP 2015156809 | A | 03-09-2015 | JP 6361161 | B2 | 25-07-2018 |
| | | | JP 2015156809 | A | 03-09-2015 |

EPO FORM P0459

For more details about this annex : see Official Journal of the European Patent Office, No. 12/82

# EP 3 815 519 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICAH WOODS.** *Using temperature to predict turfgrass growth potential (GP) and to estimate turfgrass nitrogen use, http://www.files.asianturfgrass.com/201306 growth potential.pdf*